Europäisches Patentamt

European Patent Office

Office européen des brevets

(19)

(11) Publication number: **0 251 265**
A2

(12) # EUROPEAN PATENT APPLICATION

(21) Application number: 87109300.1

(22) Date of filing: 28.06.87

(51) Int. Cl.³: **B 29 C 45/40**

(30) Priority: 04.07.86 IT 6753786

(43) Date of publication of application:
07.01.88 Bulletin 88/1

(84) Designated Contracting States:
DE FR GB

(71) Applicant: AGES S.r.l.
Via Trinita, 80
I-10026 Santena Torino(IT)

(72) Inventor: Gastaldi, Franco
Corso Matteotti 29
I-12038 Savigliano (Prov. Cuneo)(IT)

(72) Inventor: Dompe', Luigi
Via Massena 75
I-10128 Torino(IT)

(74) Representative: Modiano, Guido et al,
MODIANO, JOSIF, PISANTY & STAUB Modiano &
Associati Via Meravigli, 16
I-20123 Milan(IT)

(54) Device for the automatic extraction of generally cylindrical products in elastomer material obtained by injection within molds with counterposed dies and mold provided therewith.

(57) A device for the automatic extraction of products obtained by injection moulding by means of molds with counterposed dies (11-12) and forming cores (14), comprising, for each forming core of the plurality of cores composing the mold, an extractor (24) consisting of a winding of metal wire with helical turns inserted on said core with the possibility of freely sliding, and at least one support (27), movable with respect to said plurality of forming cores, with which is rigidly associated an end of each extractor; the movable support being subject to a guided rectilinear movement at least equal in amplitude to the rectified axial extension of the products to be extracted from said plurality of forming cores.

EP 0 251 265 A2

./...

Fig. 3

DEVICE FOR THE AUTOMATIC EXTRACTION OF GENERALLY CYLINDRICAL
PRODUCTS IN ELASTOMER MATERIAL OBTAINED BY INJECTION WITHIN
MOLDS WITH COUNTERPOSED DIES AND MOLD PROVIDED THEREWITH

The present invention relates to a device for the automatic extraction of generally cylindrical products in elastomer material, in particular natural or synthetic rubber and thermoplastic polymeric material, obtained by injection molding. In the present description, the locution "generally cylindrical" refers to cylindrical and/or conical tubular products, having axial extension which is not rectilinear but generally profiled, such as sleeves, pipettes, couplings and the like, having elbows, curves and generally variations in the axial direction.

As is known, in the art of injection molding of generally cylindrical products, female half-molds - the so-called dies - are used, accommodating therebetween the forming male member or core. The latter is rigidly associated with a framework, or carriage, by means whereof said core is kept in an intermediate position with respect to the dies so that when the mold is closed a port having a width substantially equal to the thickness of the finished product is delimited between the forming core and the dies.

The elastomer is injected in the plastic state in this port, and vulcanizes in the mold which is appropriately heated and fitted with thermostats for this purpose. For the subsequent extraction step, the dies are opened and the extraction of the product from the forming core is performed. Currently this extraction is performed manually, possibly with the aid of mechanical or preferably pneumatic pliers which blow compressed air between the core and the product with the aim of deformating the latter to facilitate its extraction.

The operation is complicated, both because of the hardening which the elastomer undergoes due to vulcanization, and because of the high temperature of the product, and is all the more troublesome as the axial profile of the product increases its convolution.

Accordingly, the yield of this injection production process is very limited, its use being however advantageous and sometimes indispensable to obtain variably profiled products and to reduce the deformations caused by extraction.

The aim of the present invention is to eliminate the disadvantages deriving from the manual extraction of the finished product in order to significantly improve the yield of known injection-molding processes by means of a considerable reduction of the idle extraction times and in particular to allow the automation of said process with a consequent significant reduction in labor and improvement of the coefficient of plant use (ratio between production time and idle time) and a consequent significant improvement in productivity.

Within the scope of this aim, the present invention also has the object of allowing a better use of the useful surface of the molds - overall dimensions being equal - by means of the distribution of a greater number of "figures" per unit of surface of the mold: such packing of figures being indeed allowed, as will become apparent hereinafter, by the elimination of manual intervention for extraction.

In order to achieve these important objects as well as others which will become apparent from the following detailed description, the present invention relates to a device for the automatic extraction of generally cylindrical products as specified, characterized in that it comprises, for each forming core of the plurality of cores which compose the mold, an extractor consisting of a winding of metal wire in helical turns, inserted on said core with the possibility of freely sliding, and at least one support, movable with respect to said plurality of forming cores and rigidly coupled to an end of each extractor: the movable support being subject to a rectilinear guided movement at least equal in amplitude to the rectified axial extension of the products to be extracted from said plurality of forming cores.

The movable support with which the end of each extractor is rigidly associated is slideably supported by a carriage which supports the forming cores and is operated to produce the axial movement of the helical-turn extractors when the dies of the mold are opened. The movement of said support can be produced by dedicated auxiliary means, for example fluidodynamic ones, or mechanically by subjecting the carriage which supports the forming cores to a rectilinear movement along its laying plane and employing said motion to produce the movement of the movable support or supports by means of cams which act on each support in the direction of the guided movement.

Further characteristics and advantages of the invention will become apparent from the following detailed description and with reference to the accompanying drawings, given by way of non-limitative example, wherein:

Fig. 1 is a plan view of a tubular pipette in elastomer material, obtained by injection molding.

Fig. 2 is a schematic cross section of a mold for the injection molding of a plurality of tubular pipettes according to fig. 1 with the automatic extraction device according to the invention: the mold being illustrated with the dies in closed position.

Fig. 3 is a plan view of the mold without the upper die.

Fig. 4 is an enlarged detail view of a forming core with the extractor winding according to the invention.

Fig. 5 is a schematic cross section view, similar to the one of fig. 2, illustrating a mold with an extractor device according to a different embodiment of the invention.

Figs. 6 and 7 are detail views of corresponding different embodiment of the extractor winding.

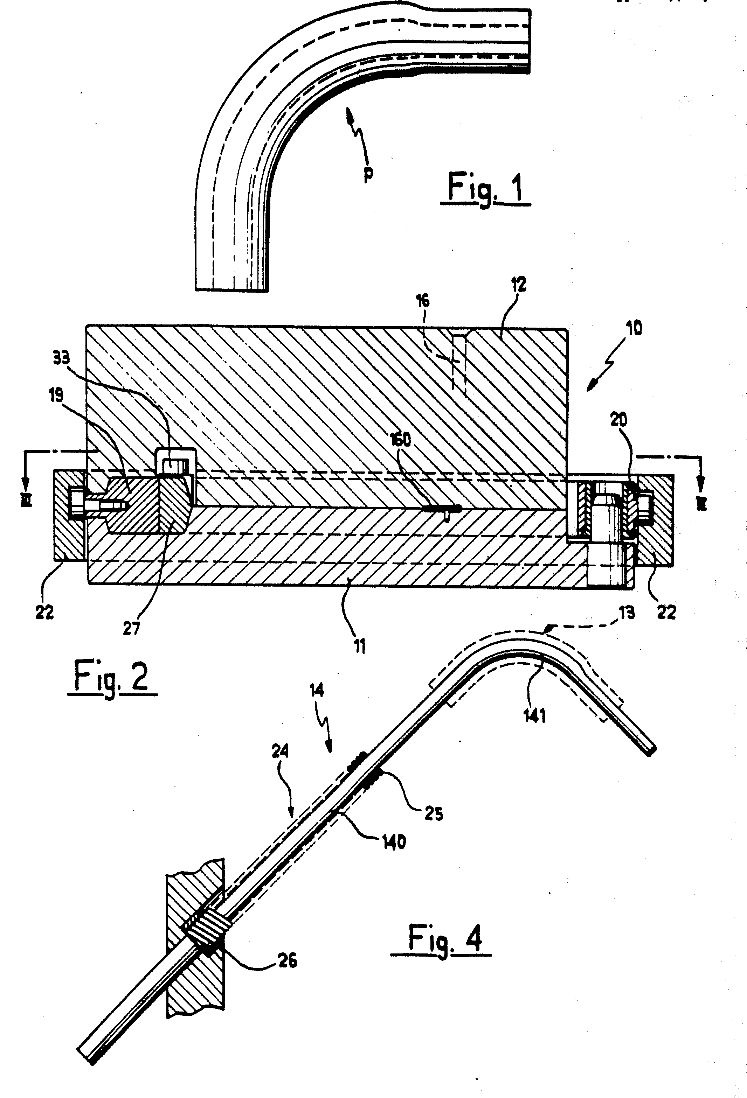

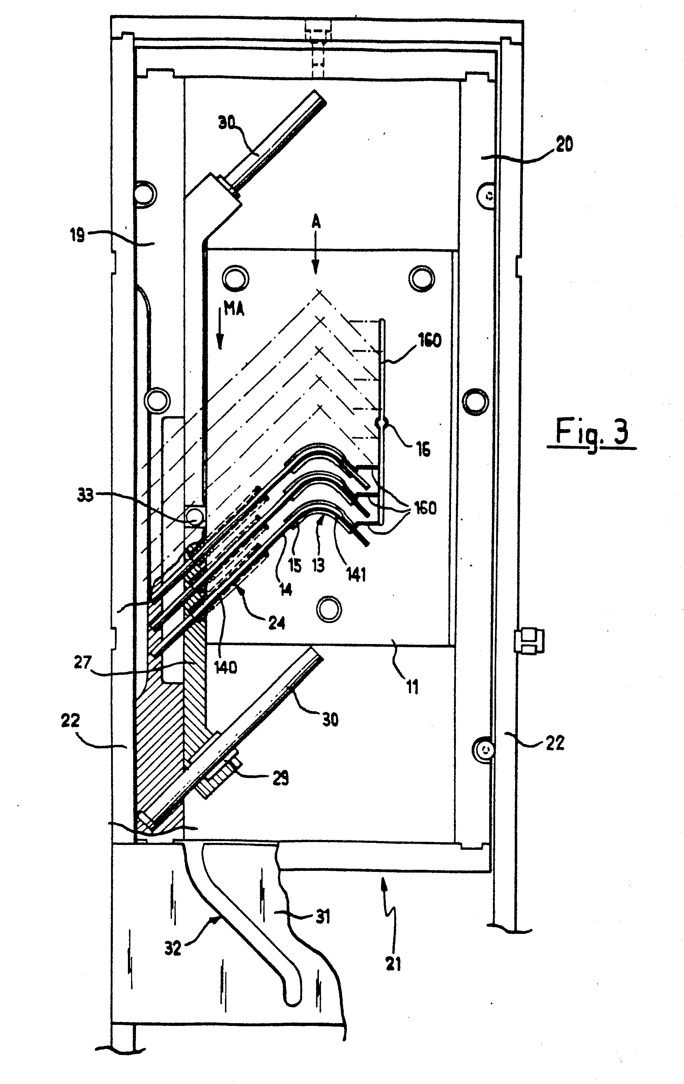

In fig. 1, P indicates a pipette in elastomer material, such as natural or synthetic rubber, having an elbow-like axial profile intended, for example, to connect two rigid pipes to one another at $90^o$. The pipette P is obtained by injection molding by means of a press 10 of the type comprising two superimposed half-molds, respectively a lower one 11 and an upper one 12, commonly known as dies, each which is provided with a plurality of impressions 13, so-called figures, which reproduce the external semicylindrical profile of the pipette. Corresponding forming cores 14 are contained in the cavities delimited by the figures of the juxtaposed dies, and each forming core delimits, in each cavity, an annular port 15 intended to accommodate the elastomer, in the plastic state, which is injected by means of a channel 16 and related branches 160 (fig. 3) in a per se known manner after the dies have been put close together and closed tight one against the other, for example by means of counterposed fluidodynamic jacks (not illustrated).

In the example illustrated in fig. 2, each die comprises an order A of figures and the mold is accordingly provided with an order of forming cores MA arranged parallel in a row on one side of the dies 11 and 12. Naturally it is also possible to provide the mold with two orders of figures, accordingly providing two rows of forming cores arranged, for example, on each longitudinal side of the dies.

The forming cores 14 of each order are rigidly planted in the corresponding side members 19 and/or 20 of a carriage 21 slideably supported in an intermediate position with respect to the dies 11 and 12. The carriage 21 is supported by guides 22 illustrated schematically in fig. 2 and is controlled to slide parallel to the arrangement of the dies 11 and 12, when the same are mutually spaced apart in open position, by motor elements not illustrated, consisting, for example, of a fluidodynamic jack having its cylinder rigidly associated with the fixed framework of the press and the stem rigidly associated with the carriage 21 or vice versa.

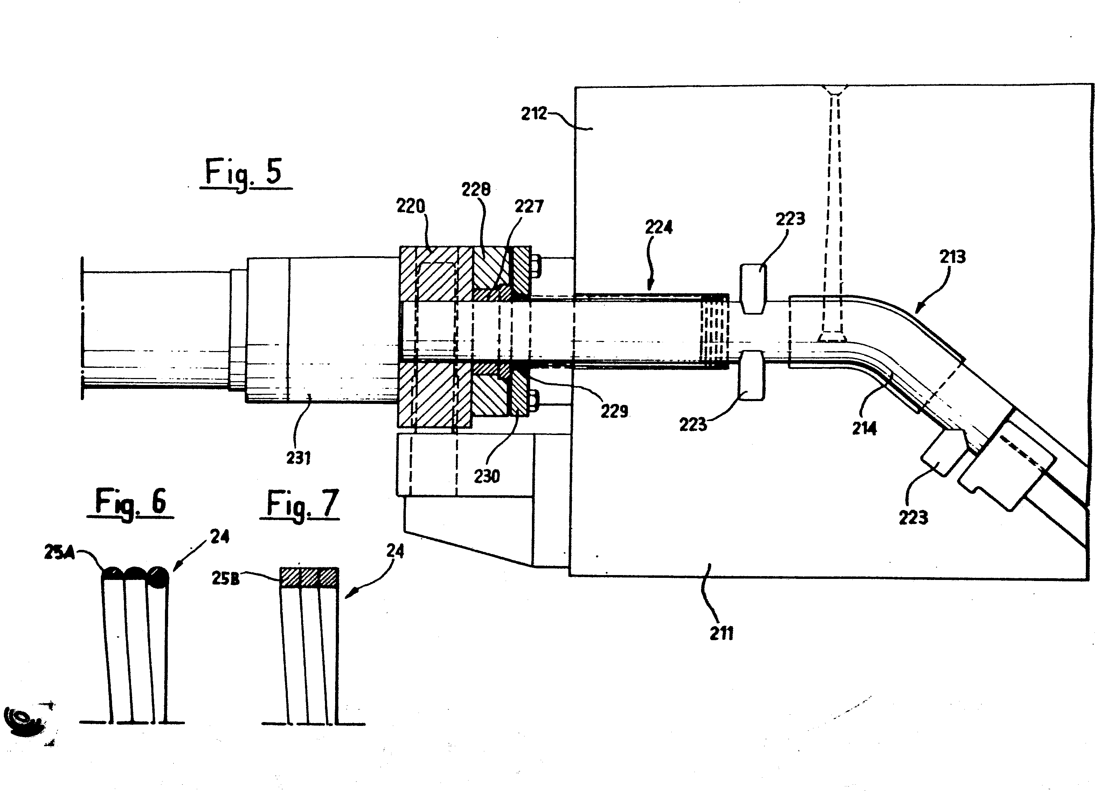

As is clearly illustrated in figures 3 and 4, each forming core 14 comprises a rectilinear stem 140 and a forming portion 141 the profile whereof matches that of the related figures 13 provided in the lower 11 and upper 12 dies of the mold. The axial extension of the rectilinear stem is chosen at least equal to the total extension of the forming portion 141 including the part of said portion which projects beyond the figure 13 when said part is provided in order to retain and center the free end of the core. A corresponding extractor 24 is inserted on each forming core 14. Each extractor consists of a winding of metal wire 25 with helical turns, advantageously of spring steel, capable of exerting an axial thrust on the molded product and of moving along the portion 141 of the core following its axial profile.

The winding 25 is inserted on the related core 14 and it is freely slideable thereon: the inner diameter of the winding being selected slightly (1÷5 tenths of a millimeter) greater than the maximum diameter of the forming core if said core has a variable cross section. An end of the extractor is free and is intended to positively engage the inner end of the product P to exert thereon the extraction thrust. The other end of the extractor is rigidly associated, for example driven with the aid of a retaining bush 26, with a related support 27 which is movable with respect to the row of forming cores 14 of each order like MA. As is clearly illustrated in fig. 3, the support 27 is mounted adjacent and parallel to a side member of the carriage 21 and is only allowed to move parallel to the extension direction of the rectilinear stem 140 of the row of forming cores.

In the illustrated example, said cores, in order to reduce the transverse dimensions of the mold, are arranged inclined at $45^{\circ}$ with respect to the axis of the side members 19-20 of the carriage 12 and the support 27 is accordingly

slideably associated, through antifriction bushes 29, on retention and guiding columns 30 which are rigidly connected to the side member 19 of the carriage 21 and orientated at 45° with respect to said side member. Once molding is complete, when the carriage 21 is made to slide outside the dies 11-12 which have been previously opened, the movable support 27 is controlled so as to slide along the guides 30 and by virtue of this sliding the free ends of the extractors 24 engage the products P extracting them from the related forming cores 14. The movement of the support 27 can be controlled by independent motor means as will be described hereinafter or, as in the example of fig. 3, can be derived from the sliding of the carriage 21. For this purpose a transverse plate 31 is rigidly supported by the guides 22 of the carriage 21: the plate 31 being therefore fixed with respect to the sliding of the carriage.

A cam slot 32 is provided on the plate 31, and a ratchet 33 of the movable support 27 engages therein after the carriage 21 has performed part of its translatory motion along the guides 22, for example one half or one third of the path: the ratchet being correspondingly arranged on the support 27. The inclination and the extension of the slot 32 are selected so that the remaining translatory motion of the carriage 21 (after the ratchet has engaged the slot) causes the total excursion of the support 27 corresponding to the extension of the stems 140 of the row of cores 14.

The different embodiment of fig. 5, which refers to a mold for large sleeves, illustrates the lower 211 and the upper 212 dies of the mold, provided with a plurality of figures 213 cooperating with corresponding forming cores

214, on each whereof a helical turn extractor coil 224 is inserted. The cores 214 are arranged parallel in a row (on the plane orthogonal to the plane of the drawing), are rigidly associated with a fixed support 220 and are also subject to the action of small conical blocks 223 supported by the dies 211-212: said small blocks engaging, when the mold is closed, in corresponding notches of the cores.

Slideable bushes 227 are mounted on the cores 214 and are connected by a transverse element 228. Each bush is provided with a conical tang 229 on which the end of the corresponding extractor winding 224 is inserted and locked by a conical ring 230. The transverse element 228 is subject to a fluidodynamic jack 231 which causes the simultaneous moving of the bushes 227 along the stem 240 of the respective cores and the consequent translatory motion of the extractor winding 224 to extract the molded sleeve after the dies 211 and 212 have been spaced apart.

In order to improve the operation of the extractor winding, especially on cores with a large diameter, it is advantageous if, as illustrated in the detail of fig. 6, the wire 25A of the winding 24 has a semicircular cross section and also, in the case of marked curvatures of the core, a quadrangular cross section as indicated at 25B in fig. 7: both cross sections being adapted to prevent overlapping of the turns in the inner (concave) part of the curved portion.

It is also advantageous, especially if the product to be extracted has a considerable diameter (over 50 millimeters) to provide the free end of the extractor winding with a cup, or washer or the like, adapted to better distribute the extraction thrust on the end of said product and to prevent the same, due to its elasticity, from partially inserting onto said free end of the extractor.

Naturally, the concept of the invention being invariant, the details of the execution and the embodiments may be extensively varied with respect to what has been described and illustrated by way of non-limitative example, without thereby abandoning the scope of the invention.

CLAIMS

1. Device for the automatic extraction of generally cylindrical products (P) in elastomer material obtained by injection molding by means of molds with counterposed dies (11,12;211,212) and forming cores (14;214) as specified, characterized in that it comprises, for each forming core (14;214) of the plurality of cores which compose the mold, an extractor (24;224) consisting of a winding of metal wire with helical turns, inserted on said core with the possibility of freely sliding, and at least one support (27;227,228), movable with respect to said plurality of forming cores, and rigidly coupled to an end of each extractor (24;224), the movable support (27;227,228) being subject to a rectilinear guided movement at least equal in amplitude to the rectified axial extension of the products (P) to be extracted from said plurality of forming cores.

2. Extraction device according to claim 1, wherein the inner diameter of the winding of wire which constitutes the extractor (24;224) is slightly larger than the maximum diameter of the related forming core (14;214).

3. Extraction device according to claims 1 and 2, characterized in that said winding which constitutes the extractor (24;224) is made of metal wire having a circular cross section.

4. Extraction device according to claims 1 and 2, characterized in that said winding (25A) which constitutes the extractor (24) is made of metal wire having a semicircular cross section.

5. Extraction device according to claims 1 and 2, characterized in that said winding (25B) which constitutes

the extractor (24) is made of metal wire having a quadrangular cross section.

6. Device according to the preceding claims, characterized in that said winding which constitutes the extractor (24;224) is made of harmonic spring steel.

7. Extraction device according to claim 1, characterized in that it comprises auxiliary dedicated means (231) adapted to move said movable support (227;228) in the direction of said guided movement.

8. Extraction device according to claim 6, characterized in that said forming cores (14) are supported by a movable carriage (21) which is extractable from the dies (11,12) of the mold, and in that mechanical means (32,33) are provided to exploit the movement of the carriage to move said movable support (27) in the direction of said guided movement.

9. Extraction device according to any one of the preceding claims, characterized in that each of said forming cores (14;214) comprises a rectilinear stem (140;240) and a forming portion (141), in that said rectilinear stem has an axial extension at least equal to the forming portion, and in that the winding which constitutes the extractor (24;224) in turn has an overall axial extension at least equal to that of said stem.

10. Extraction device according to the preceding claims, characterized in that the free end of the extractor (24;224) winding is provided with an element (cup or washer) adapted to distribute on the corresponding end of the product (P) the extraction thrust.

11. Mold with counterposed dies for the injection molding of generally cylindrical products in elastomer material including the extractor device according to the preceding claims, characterized in that it comprises at least one order of forming cores (14) arranged parallel in a row and supported by the rigid side member (19) of a movable carriage (21), extractable from the dies (11,12) of the mold (10): a plurality of windings (24) in metal wire, each inserted, freely slideable, on each forming core: a support (27) which is movable parallel to the common direction of the rectilinear stems (140) of said forming cores, and is rigidly connected to the ends of the extractor windings which are opposite to those intended to engage the products (P) to be extracted, guiding and retention means (20) for said support (27) and a transverse plate (31), fixed with respect to the carriage (21), provided with a cam slot (32) for engagement by a ratchet (33) of the support, when the carriage is extracted from the dies, to move said support (27) in the guided extraction direction parallel to the stems (140) of the row of forming cores (14).

12. Mold with counterposed dies including the extractor device according to claims 1 to 10, characterized in that it comprises a row of forming cores (214) supported by a fixed transverse element (220), a plurality of extractor windings (224) each inserted on each forming core, a plurality of bushes (227) each slipped on each forming core and each connected to the end of a corresponding extractor winding (224), a movable transverse element (228) connecting said bushes to a fluidodynamic cylinder (231) acting on said movable transverse element (228) to move the bushes (227) and the extractor windings (224) connected thereto in the common direction of the stems (240) of the row of forming cores (214).

Fig. 1

Fig. 2

Fig. 4

Fig. 3

Fig. 5

Fig. 6

Fig. 7